# NEW EUROPEAN PATENT SPECIFICATION

(11) **EP 0 483 153 B2**
(45) Date of publication and mention of the opposition decision: **27.05.1998**
(45) Mention of the grant of the patent: 31.08.1994
(21) Application number: 90906818.1
(22) Date of filing: 16.05.1990
(51) Int. Cl.: B29C 49/00, B29C 47/90, B29C 47/12

(54) **METHOD FOR FORMING TUBING UTILIZING SUCTION AND PNEUMATIC PRESSURE AT THE SURFACE OF THE COOLING PLUG**
VERFAHREN ZUM FORMEN VON ROHREN UNTER VERWENDUNG VON PNEUMATISCHEM UNTER- UND ÜBERDRUCK AN DER OBERFLÄCHE DES KÜHLDORNS
PROCEDE DE FORMAGE DE TUBES PAR L'APPLICATION D'ASPIRATION ET DE PRESSION PNEUMATIQUE A LA SURFACE DU MANDRIN DE REFROIDISSEMENT

(30) Priority: 17.05.1989 CA 599965
(43) Date of publication of application: 06.05.1992
(73) Proprietor: LUPKE, Manfred Arno Alfred, Concord, Ontario L4K 2Z3 (CA)
(72) Inventor: LUPKE, Manfred Arno Alfred, Concord, Ontario L4K 2Z3 (CA)
(74) Representative: Stachow, Ernst-Walther, Prof. Dr.
(86) International application number: CA9000159
(87) International publication number: WO9014208

(56) References cited:
- WO-A-85/02144
- WO-A-88/05377
- FR-A- 2 247 661
- GB-A- 1 258 181
- US-A- 3 743 456
- US-A- 4 808 098

## Description

### TECHNICAL FIELD

The invention relates to apparatus for molding thermoplastic tubing having at least one bell therein in which a sizing plug is used to define internal diameter of the tubing. The invention is especially useful in the production of ribbed or double walled tubing.

### BACKGROUND ART

The apparatus is of the type in which tubing of thermoplastic material is continuously extruded into a travelling tubular mold tunnel about a mandrel and is confined to the shape of the pipe by a sizing plug downstream of the mandrel. Such a plug may, on some occasions, when the extrudate does not easily flow fully into the mold, be heated to increase the fluidity of the extrudate so that it may more easily flow into recesses of the mold, for example under the influence of suction from the bases of the recesses. However, more usually the extrudate is provided in sufficiently molten condition to flow fully into the mold. In this case it is necessary to provide a sizing plug to define the inner wall of the pipe so as to confine the extrudate in an appropriate casting cavity.

A simple sizing plug defining the inner wall of a tube is described by Chaplain in U.S. Patent No. 4,365,948 issued December 28, 1982. Usually some temperature control is desirable in a sizing plug and Lupke in U.S. Patent No. 4,545,751 issued October 8, 1985 describes a more sophisticated arrangement. In that arrangement the sizing plug does not define an inner wall of the pipe but is used to distribute air into the inside of corrugated tubing. Pressured air is delivered through a central core coaxial with an extrusion nozzle. Hot peripheral air is drawn off and central cool air is permitted to leave the plug to contact the inside of corrugated pipe, the plug being inwardly spaced from the inner pipe wall. Such arrangement is suitable for use where corrugated tubing is involved but the range of temperature in cooling may be limited. The arrangement is less suitable where ribbed tubing is to be produced since the plug, in that case, should be a plug contacting the inside wall of the pipe to confine it into a casting region. When this is the case, air cannot be released between the plug wall and the inner pipe wall for cooling. A cooling plug suitable for use in the formulation of ribbed pipe is disclosed by Lupke in his later U.S. Patent No. 4,555,230 issued November 26, 1985. In that patent Lupke does not attempt to use released cooling air but provides within and near the surface of a follower plug, a helical coil of tubing through which cooling fluid may be passed.

Apparatus for the production of plain single walled tube with no ribs or corrugations usually comprises extruding a parison into a mold the temperature of which may be adjusted by the use of a water jacket. No sizing plug is used to form the inner surface of the tube but gas pressure or the like may be used to press the tube against the outer mold. The inner wall of tube thus formed may not be totally even due to a variety of reasons such as uneven shrinkage during setting of the tube. Moreover, it would be advantageous to be able to produce such tube at greater speeds.

Canadian Patent Application No. 586,828 to the same inventor and filed December 20, 1988 describes and claims a cooling plug in which cooling of the plug is by isentropic expansion of gas into the plug itself. This has various advantages as to the transport to the plug of cooling fluids and controllability of the degree of cooling but that patent application does not address the problem of rythmic bulges and indentations in the inner tube wall.

The sizing plug is provided to form a smooth inner wall to the formed tube but, when ribbed pipe is formed, some problems have occurred in obtaining a smooth inner wall. The reason is due to the variation in the requirement of plastic material due to the varying wall thickness for the ribs and troughs. Thus, more plastic material will be required to form the ribs than that part of the tube wall (trough) between ribs. Stresses are set up in the apparatus at the point of filling the mold blocks due to this varying demand for plastic material. Moreover, uneveness due to shrinkage is accentuated where thickness of the tube varies, as for example, where there are ribs and troughs.

Canadian Patent Application No. 577,653 of the same inventor and filed September 16, 1988. describes and claims the use of an accumulator chamber for plastic material at the point of mold filling. The accumulator chamber is intended to even out pressure variations and reduce stresses. The use of such an accumulator chamber is very useful in its intended purpose but there still may be some effects of pressure variations to be seen on the inside wall of the tube.

Thus, the inside wall of the tube may have a slight wave formation, tending to apparently bulge inwardly between the ribs where the pressure of extrudate is greater, and tending to actually recede to form an indentation opposite a rib where the pressure of extrudate is less. This effect is accentuated when an accumulator chamber is not used.

When double walled corrugated tubing is to be produced difficulties have been encountered due to pressure within the corrugations. If this pressure is too low, the inner wall may bow into the corrugation forming an undesirable concavity in the inner wall. If the pressure is too high, the inner wall may bow away from the corrugation forming an undesirable bulge in the inner wall.

French patent application, published under No. FR-A-2,247 661 discloses a method of forming a tube in a traveling mold including applying pneumatic pressure through a number of fluid communication channels of a plug to bias the tube away from the plug.

PCT application W0 88/05377 discloses a method of forming bells in ribbeds tubing by applying pneumatic pressure from within a plug.

Canadian Patent Application No. 586,828 to the same invention and filed January 16, 1989 describes and claims method of applying vacuum applied at the surface of a cooling plug to mitigate rhythmic bulges and indentations in the inner tube wall.

U.S. Patent No. 4 808 098 issued February 28th, 1989 discloses a cooling plug having two annular distributing grooves, the grooves being independently connected to a vacuum source and one groove being axially remote and the other being axially close to the extrusion orifice, whereby the intensity of vaccuum along the plug may be varied.

Pressure and suction are utilized for very different purposes in tube forming operation.

The present invention relates to an improvement in the method of Canadian Patent Application No. 588,338 whereby suction is alternated with pressure, when bells are required in the tube.

### DISCLOSURE OF THE INVENTION

Thus, according to the invention there is provided a method for forming a seamless thermoplastic tube having at least one bell therein, comprising extruding a tubular parison of heated thermoplastic material into a travelling mold tunnel comprising cooperating runs of interlinked mold blocks and passing the parison about an outer surface of a core plug within the tube to form a shaped tube, wherein mold blocks are provided to mold an outer surface of said bell, pneumatic pressure being applied through a number of fluid communication channels within the plug over at least a portion of the outer surface thereof adjacent the bell forming mold blocks, and suction is applied through the fluid communication channels when non-bell forming mold blocks are adjacent the tube.

The method of the invention is especially applicable to forming single walled tube as well as double walled corrugated tube. If double walled corrugated tube is formed, imperfections in the inner wall of such tubing may tend to be more pronounced due to differences in requirements for extrudate along the mold. When imperfections arise in the inner wall of plain wall tubing, the method of the invention is also useful. In a preferred embodiment of the invention, the pneumatic pressure is applied at an upstream portion of the plug and suction is applied at a downstream portion of the plug.

The suction applied at the surface of the sizing plug may be used to draw cooling water or other liquid, from the interior of the plug through orifices provided to the tube sizing surface. Such water or other liquid may be useful for lubrication or other purposes at the interface between the inner wall of the formed tube and the plug.

### BRIEF DESCRIPTION OF THE DRAWINGS

The method of the invention is especially applicable for use with the two stage apparatus disclosed in U.S. Patent No. 4 808 098.

Embodiments of the invention will now be described by way of example with reference to the accompanying drawings in which:
- Figure 1: is a sectional view of an extrusion nozzle of apparatus for molding thermoplastic pipe in a traveling mold tunnel, showing part of the mold tunnel and a cooling plug according to the invention;
- Figure 2: is a view of a cooling plug such as that of Figure 1;
- Figure 3: is a sketch of a longitudinal section of prior art tubing showing uneveness of the interior wall;
- Figure 4: is a sketch similar to that of Figure 3 showing the desired profile of the inner wall;
- Figure 5: is a sketch similar to Figure 1 showing formation of a bell under pressure;
- Figure 6: is a view similar to that of Figure 1 but showing the formation of corrugated double walled tubing;
- Figure 7: shows the apparatus of Figure 6 but under pressure rather than vacuum;
- Figure 8: shows the formation of a bell apparatus of Figure 6; and
- Figure 9: shows a variation in bell formation using a cooling plug having a forward pressure outlet.

### MODE(S) OF CARRYING OUT THE INVENTION

Referring to the drawings the apparatus comprises a pair of complementary mold assemblies. Each mold assembly comprises articulately interconnected mold blocks 16.

The mold blocks 16 may be such as to mold pipe of any desired configuration. For example, mold blocks 16 may be such as to mold annularly ribbed pipe or helically ribbed pipe, double walled pipe, or other configurations. However, it is desired that the inner wall of the pipe be smooth.

The mold assemblies may be operatively positioned to locate an extrusion head 23 being operatively coupled to the nozzle of an extrusion machine, which may be of conventional form. If required, the mold assemblies may be moved away from the extrusion head 23 in order to provide access it for maintenance, or other reasons.

The extrusion head 23 comprises an axially extending tubular portion 26 which is surrounded by a tubular member 27, one end portion of which screwthreadedly supports an outer member 28 of an annular extrusion nozzle 24. The tubular portion 26 carries an inner member 29 of the extrusion nozzle having a frustoconical form which terminates at an annular orifice 31 which communicates with the annular space 32 between the pipe 27 and the portion 26. This annular space 32, in turn, communicates with the output of the extrusion machine (not shown) passing the thermoplastic material, such as PVC to the extrusion nozzle 24.

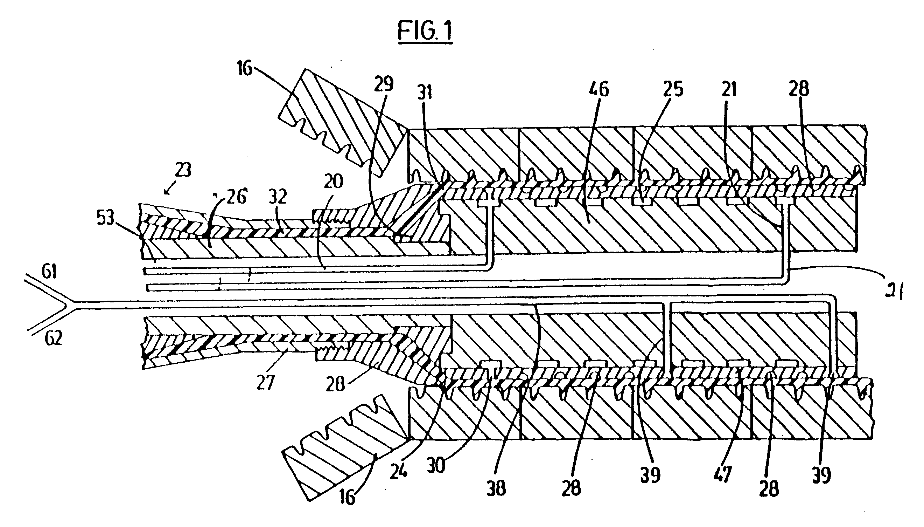

Downstream of the extrusion nozzle 24 the extrusion head 23 carries, on an extension of tubular portion 26, a generally cylindrical sizing plug 46. The plug 46 defines the inner wall of pipe formed by the thermoplastic material leaving the extrusion nozzle 24 to be molded by mold blocks 16. When the pipe is to be single walled annular by ribbed pipe, as shown in Figure 1, plug 46 holds thermoplastic material in troughs of the mold blocks 16 to form annular ribs on the outer surface of the resulting pipe.

Cooling of plug 46 may be by isentropic expansion of compressed gas, for example, carbon dioxide, as described and claimed in aforementioned Canadian Patent Application No. 586,528 filed December 20th, 1988. Moreover, lubrication of the cooling plug may be through the provision of a porous reservoir of lubricant as described in said Canadian patent application No. 586,528. Alternatively, cooling of plug 46 may be any conventional means, for example, flow of cooling water from conduit 20 through channels 25 arranged internally of and extending over, the length of the plug 46. Return flow of cooling water may be through conduit 21 through core 53 of tubular member 26. The cooling arrangements for plug 46 form no part of the present invention and many variations in such cooling arrangements are possible for simplicity. Again this may be through any conveniently located return conduit.

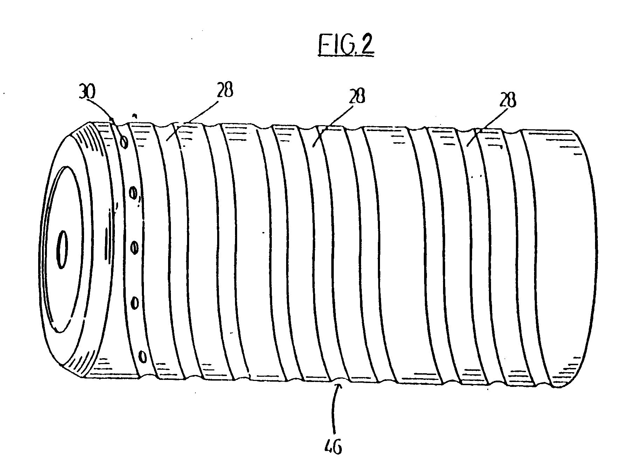

The cooling plug 46 conveniently comprises a core connected at one end to inner member 29 having a channel 25 in its outer surface for cooling liquid, for example, water. Core has an axial bore communicating with, and extending bore 53 of extrusion head 23. Channel 25 may be of helical form or any other convenient shape. Core may be covered by sleeve 47 to confine cooling liquid to channel 25. Sleeve 47 has a generally smooth outer surface to size the inner wall of tubing in the mold, but is provided with a channel or channels 28 to distribute suction or pressure over the outer surface of sleeve 47. One form of channel 28 is illustrated in Figure 2 as a helical channel has a small cross-section in comparison with the cross-section of cooling channel 25 so that there is little danger of plastic extrudate being drawn into the suction channel 28 when suction is applied. In fact, the width of channel 28 may be as small as 0,25 mm (0.010 inches). Other shapes of channel are, of course, possible. Channel 28 communicates with a single source of suction (not shown or with a source of pressure (not shown) via branches 61, 62 of conduit 38 which opens into channel 28 at suction or pressure port 39. Preferably, each channel 28 is located to apply suction downstream of the point at which cooling is started so that plastics material will not be drawn into channels 28. Equally channel 28 should be located such that pressure will cause the desired enlargement of the tube. This channel 28 must be located at a point where the tube is still sort enough to be formed.

When suction or pressure is applied at the downstream end of the plug 46, the diminution in strength is progressive toward the upstream end.

It may be advantageous to provide small communicating channels 30 between cooling liquid channel 25, or other liquid reservoir in the cooling plug, and the external surface of the plug 46. Suction applied through channel 28 will thus tend to draw small amounts of liquid to the outside of the plug to have a possible lubricating and/or smoothing effect on the tubing wall. Lubrication may also be provided by a porous forward region of plug 46 as, for example, described in aforesaid Canadian patent application No. 586,528.

When annularly ribbed pipe is being formed as described and claimed in Canadian Patent Application No. 577,653 filed 16th September, 1988, it is convenient if conduit 38 opens to channel 28 immediately downstream of the accumulator chamber.

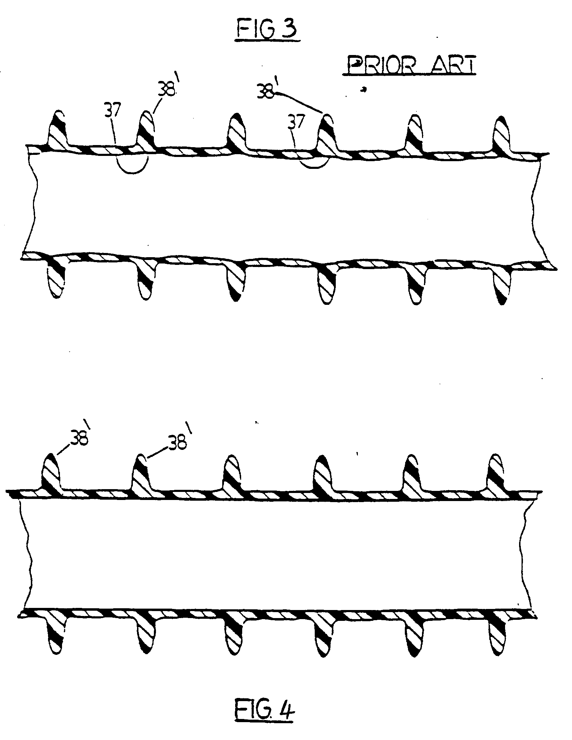

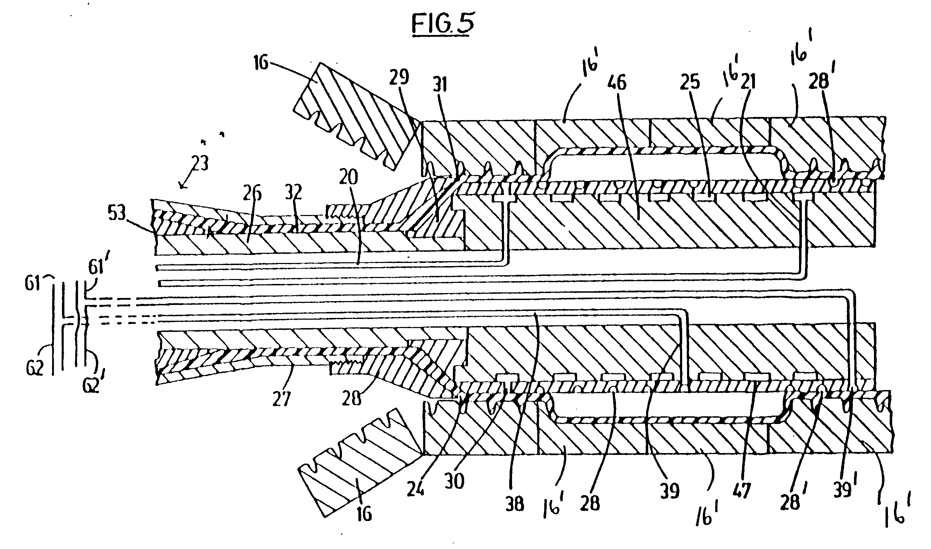

In conventional operation, there is a tendency for the inner wall of the tube to be formed as shown in the exaggerated sketch of Figure 3. When suction is applied to the inner wall of the tube, especially sufficiently for upstream that the plastics material is easily flowable the tendency to form indentation 37 opposite each rib 38' of tube may be mitigated, as shown in Fig. 4.

While Figure 1 shows the apparatus using suction, Figure 5 shows the apparatus using pressure. Especially formed molds 16' of the traveling mold are provided for the formation of bells and the plastics material is forced thereinto under pneumatic pressure from channel 28. The apparatus of Figure 5 also differs from that of Figure 1 in that conduits 39 in Figure 1 are branches of conduit 38. Thus, when using the apparatus of Figure 1 only vacuum or pneumatic pressure may be applied in channels 28 from a single source. Moreover the pressure of either the vacuum or pneumatic pressure in the channels 28 of one end of the cooling plug 46 is not not independently adjustable in the apparatus illustrated in Figure 1. In Figure 5, however, the channels 28' at the downstream end of plug 46 are, through conduit 39', independently connected to separate sources of vacuum or pneumatic pressure through respective branch conduits 61', 62'. Similarly upstream channels 28 connected through conduits 39 and 38 to branch conduits 61, 62 for application of vacuum or pneumatic pressure respectively.

The Figure 5 apparatus allows independent regulation of either vacuum or pneumatic pressure at opposite ends of the cooling plug 46 and also makes it possible to apply vacuum at one end of cooling plug 46 and pneumatic pressure at the other end.

Figure 5 illustrates the formation of a bell in annularly ribbed pipe and the application of vaccuum through channels 28, 28' when no bell is required, aiding the formation of a smooth inner wall of the resulting tube. Cooperating mold blocks 16' providing for molding a bell are provided in the endless mold block systems. When these mold blocks 16' are located as shown in Figure 5, vacuum applied through branch conduit 61 is turned off and pneumatic pressure is applied through branch conduit 62. Vacuum may suitably be retained in branch conduit 61' leading to channels 28' to aid in drawing the tube back to the outer surface of the cooling plug 46 when bell formation is no longer required.

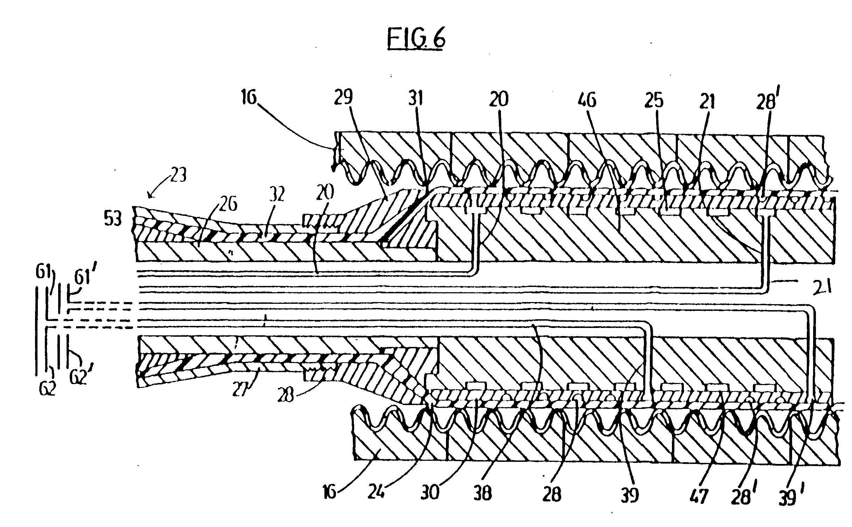

Figure 6 shows a similar apparatus to that of Figure 5 but the Figure 6 apparatus is for the formation of double walled corrugated tubing. Figure 6 shows the apparatus used with suction applied at both channels 28 and 28' resulting in a tube with smooth inner walls. The outer corrugated wall is formed from an outer plastic parison 70 extruded upstream of the inner extrudate 31 and biased into the mold in any suitable manner.

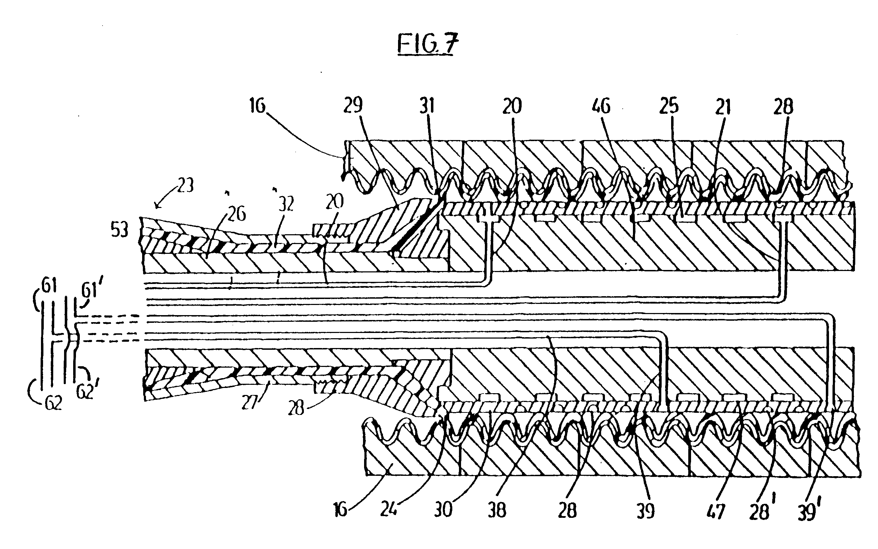

If suction is replaced by pneumatic pressure at channels 28, 28' the inner tube will be brassed into the corrugations of the outer tube as shown in Figure 7 to form a two ply corrugated tube.

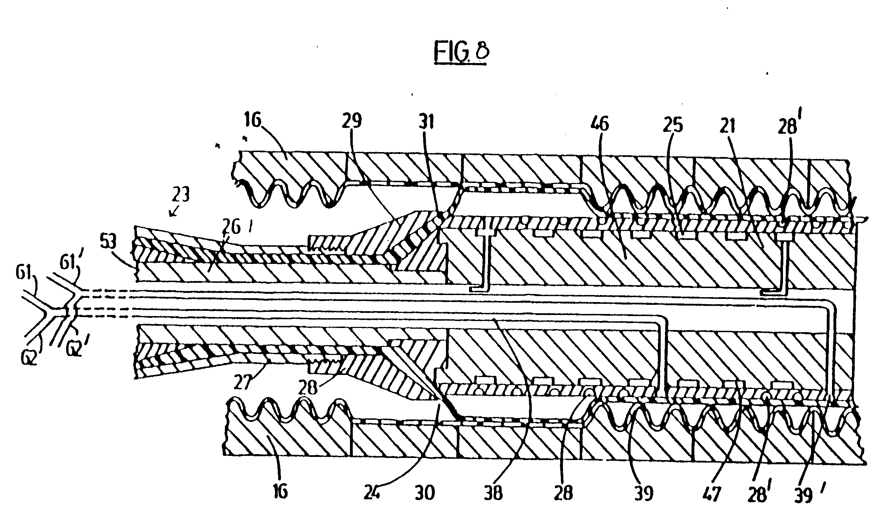

While uses for such two ply corrugated tube can be envisaged, the use of pneumatic pressure is probably more useful for bell formation as shown in Figure 8. In this case mold blocks 16' are provided for bell formation and the outer parison is forced into them by conventional or other suitable means. Thereafter, when mold blocks 16' are located as shown in Figure 8, pneumatic pressure is applied at channels 28 rather than suction. Again, it is preferable that suction be maintained at channels 28' to help bring the tube back to the surface of plug 46 as desired.

It may be seen that various modifications may be made without departing from the scope of the invention. As shown, only two independent sets of channels 28, 28' are shown but it is clear that more than two sets are possible to add to the permutations and combinations of pressure and vacuum which may be applied.

Moreover, while Figure 2 shows one illustration of plug 46 having simple helical channels 28, these channels may have various forms to cover the surface of plug 46. Preferably, channels 28 may comprise two interseting helical channels of opposite Twist.

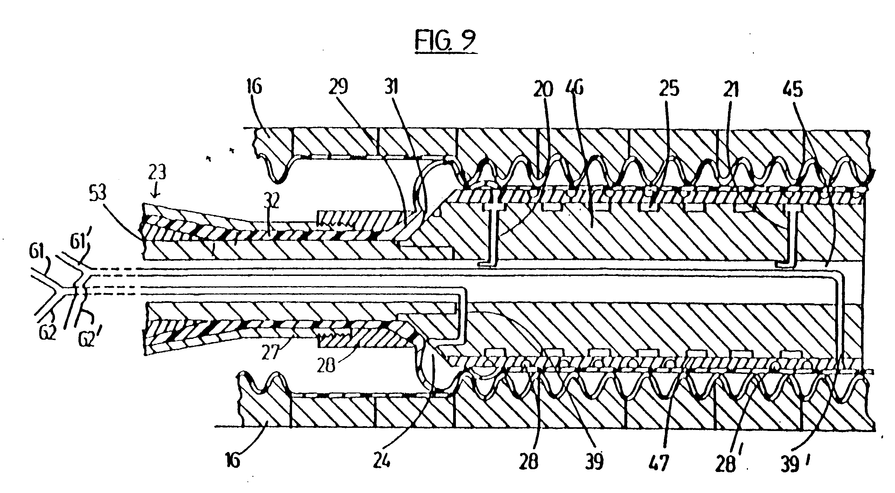

Figure 9 shows a modification in which pressure is applied from an upstream front end of the plug 46. In this case bell formation of the inner parison may be prior to or at the point of entry into the channel between the mold and the plug 46. The inner parison will tend to balloon in an upstream direction to line bell 72. It is believed that certain advantages may derive from this embodiment.

## Claims

1. A method for forming a seamless thermoplastic tube having at least one bell therein, comprising extruding a tubular parison of heated thermoplastic material into a travelling mold tunnel comprising cooperating runs of interlinked mold blocks (16) and passing the parison about an outer surface of a core plug (46) within the tube to form a shaped tube; characterized in that mold blocks (16') are provided to mold an outer surface of said bell, pneumatic pressure being applied through a number of fluid communication channels (39,39') within the plug (46) over at least a portion of the outer surface thereof adjacent the bell forming mold blocks (16'), and suction is applied through the fluid communication channels (39,39') when non-bell forming mold blocks (16) are adjacent the tube.

2. A method as claimed in claim 1 for forming a single walled tube.

3. A method as claimed in claim 1 for forming a double walled corrugated tube.

4. A method as claimed in claim 1 in which the pneumatic pressure is applied at an upstream portion (28) of the plug and suction is applied at a downstream portion (28') of the plug.

## Patentansprüche

1. Verfahren zur Formung nahtloser thermoplastischer Rohre, die mindestens eine Manschette aufweisen, wobei ein rohrförmiger Külbel von vorgeheiztem thermoplastischem Material in einen wandernden Formtunnel extrudiert wird, welcher zusammenwirkende Läufe von untereinander verbundenen Formwerkzeugen (16) aufweist, und wobei der Külbel innerhalb des Rohres über die Außenfläche des Kerndornes (46) geführt wird, um ein formgestaltetes Rohr zu bilden, **dadurch gekennzeichnet**, daß Formwerkzeuge (16') vorgesehen sind, um die Außenfläche der Manschette zu formen und
daß pneumatischer Überdruck durch eine Anzahl von Verbindungskanälen (39, 39') innerhalb des Dornes (46) über zumindest einen Teil der an die die Manschetten formenden Formungsblocks (16') angrenzenden Außenfläche des Dornes angelegt wird, und
daß Unterdruck über die Verbindungskanäle (39, 39') angelegt wird, wenn nicht manschettenformende Formgebungsblöcke (16) dem Rohr benachbart sind.

2. Verfahren nach Anspruch 1, **dadurch gekennzeichnet**, daß einwandige Rohre geformt werden.

3. Verfahren nach Anspruch 1, **dadurch gekennzeichnet**, daß doppelwandige gewellte Rohre geformt werden.

4. Verfahren nach Anspruch 1, **dadurch gekennzeichnet**, daß der pneumatische Überdruck an einem stromaufwärts liegenden Teil (28) des Dornes und Unterdruck an einem stromabwärts gerichtetem Teil (28') des Dornes angelegt werden.

## Revendications

1. Procédé de formage d'un tube en matière thermoplastique sans soudure comportant au moins une tulipe, comprenant les opérations consistant à extruder une préforme tubulaire de matière thermoplastique chauffée dans un moule-tunnel mobile, comprenant des séries de blocs de moulage articulés (16) adjacents, et à faire passer la préforme sur la surface extérieure du mandrin central (46) à l'intérieur du tube pour former un tube profilé; caractérisé en ce que des blocs de moulage (16') sont prévus pour mouler la surface externe de ladite tulipe, une pression pneumatique étant appliquée, par un certain nombre de canaux (39, 39') de communication de fluide dans le mandrin (46), sur une partie au moins de la surface extérieure de celui-ci voisine des blocs de moulage (16') formant la tulipe, et une aspiration étant appliquée par les canaux (39, 39') de communication de fluide lorsque des blocs de moulage (16) ne formant pas de tulipe sont voisins du tube.

2. Procédé selon la revendication 1 pour le formage d'un tube à simple paroi.

3. Procédé selon la revendication 1 pour le formage d'un tube ondulé à double paroi.

4. Procédé selon la revendication 1, dans lequel la pression pneumatique est appliquée à une partie amont (28) du mandrin et l'aspiration est appliquée à une partie aval (28') du mandrin.
